# EUROPEAN PATENT APPLICATION

(11) **EP 4 361 817 A1**
(43) Date of publication of application: **01.05.2024**
(21) Application number: 22848382.2
(22) Date of filing: 20.07.2022
(51) Int. Cl.: G06F 11/20, G06F 11/16

(54) **2*2OO2 SECURITY SYSTEM BASED ON CLOUD PLATFORM**

(30) Priority: 29.07.2021 CN 202110861010
(71) Applicant: Siemens Mobility GmbH, 81739 München (DE)
(72) Inventor: CHEN, Dian, Fuzhou, Fujian 350214 (CN)
(74) Representative: Isarpatent
(86) International application number: PCT/CN2022/106886
(87) International publication number: WO 2023/005777

(57) **Abstract**

Provided in the present embodiment is a 2*2OO2 security system based on a cloud platform. The system comprises: a first 2OO2 sub-system, which is arranged on at least two cloud hosts, wherein the first 2OO2 sub-system comprises a first virtual machine and a second virtual machine, and different types of operating systems are installed on the first virtual machine and the second virtual machine; a second 2OO2 sub-system, which is arranged on at least two cloud hosts, wherein the second 2OO2 sub-system comprises a fourth virtual machine and a fifth virtual machine, and different types of operating systems are installed on the fourth virtual machine and the fifth virtual machine; and a first management node, which is arranged on a cloud host, wherein the first management node comprises a third virtual machine, and the first management node is used for performing switching to use the second 2OO2 sub-system when it is detected that a fault occurs in the first 2OO2 sub-system, or for performing switching to use the first 2OO2 sub-system when it is detected that a fault occurs in the second 2OO2 sub-system. By means of the present embodiment, the availability, reliability and maintainability of a 2*2OO2 security system can be effectively improved, and the cost can be reduced.

## Description

### Technical field

Embodiments of the present application relate to the field of cloud computing, in particular to a 2*2OO2 security system based on a cloud platform.

### Background art

A conventional 2*2OO2 (double 2-out-of-2) security system has a hardware structure comprising a management unit, an A system and a B system. The A system comprises a host A1 and a host A2, while the B system comprises a host B1 and a host B2. The host A1, host A2, host B1, host B2 and management unit each run on mutually independent computers. The host A1 and host A2 within the A system form an independent 2-out-of-2 system; the B system is similar to the A system. The software/hardware and structures of the A system and B system are the same, forming a redundant hot standby system; this system is a 2*2OO2 security system. The host A1 and host A2 of the A system, the host B1 and host B2 of the B system and the management unit communicate with each other via an internal bus of the security system, to realize functions such as data comparison between two machines in the same system, active/standby system management, and active/standby system switching.

However, a conventional 2*2OO2 security system is highly reliant on a hardware architecture formed by multiple hardware computing units; specifically, the A system and the B system require 4 independent hardware computing units, and the management unit requires 1 independent hardware computing unit, so the conventional 2*2OO2 security system requires at least 5 independent hardware computing units. Thus, a conventional 2*2OO2 security system has a high hardware cost, as well as high maintenance costs throughout its life cycle; reliability and usability are very difficult to improve, and maintainability is poor. As can be seen, the question of how to effectively improve the usability, reliability and maintainability of a 2*2OO2 security system and reduce costs has become a technical problem that is in urgent need of a solution at the present time.

### Summary of the invention

An object of the present application is to propose a 2*2OO2 security system based on a cloud platform, in order to solve the technical problem in the prior art of how to effectively improve the usability, reliability and maintainability of a 2*2OO2 security system and reduce costs.

According to a first aspect of embodiments of the present application, a 2*2OO2 security system based on a cloud platform is provided, the system comprising: a first 2OO2 sub-system, the first 2OO2 sub-system being disposed on at least two cloud hosts, and the first 2OO2 sub-system comprising a first virtual machine and a second virtual machine, with operating systems of different types installed on the first virtual machine and second virtual machine; a second 2OO2 sub-system, the second 2OO2 sub-system being disposed on at least two cloud hosts, and the second 2OO2 sub-system comprising a fourth virtual machine and a fifth virtual machine, with operating systems of different types installed on the fourth virtual machine and fifth virtual machine; and a first management node, the first management node being disposed on a cloud host, and the first management node comprising a third virtual machine, the first management node being configured to switch to using the second 2OO2 sub-system upon detecting that a fault has occurred in the first 2OO2 sub-system, or switch to using the first 2OO2 sub-system upon detecting that a fault has occurred in the second 2OO2 sub-system.

Optionally, the system further comprises: a second management node, the second management node being disposed on a cloud host, and the second management node comprising a sixth virtual machine, the second management node being configured to work with the first management node in a redundant hot standby manner.

Optionally, the first virtual machine is provided with a first diagnostic component, the first diagnostic component being configured to obtain a first running state, the first running state comprising: a running state of at least one of the first virtual machine, an application program running on the first virtual machine, and the first diagnostic component; the second virtual machine is provided with a second diagnostic component, the second diagnostic component being configured to obtain a second running state, the second running state comprising: a running state of at least one of the second virtual machine, an application program running on the second virtual machine, and the second diagnostic component; the first diagnostic component and the second diagnostic component diagnose a running state of the first 2OO2 sub-system by exchanging the first running state and the second running state, and notify the second 2OO2 sub-system of the running state of the first 2OO2 sub-system; the fourth virtual machine is provided with a fourth diagnostic component, the fourth diagnostic component being configured to obtain a fourth running state, the fourth running state comprising: a running state of at least one of the fourth virtual machine, an application program running on the fourth virtual machine, and the fourth diagnostic component; the fifth virtual machine is provided with a fifth diagnostic component, the fifth diagnostic component being configured to obtain a fifth running state, the fifth running state comprising: a running state of at least one of the fifth virtual machine, an application program running on the fifth virtual machine, and the fifth diagnostic component; the fourth diagnostic component and the fifth diagnostic component diagnose a running state of the second 2OO2 sub-system by exchanging the fourth running state and the fifth running state, and notify the first 2OO2 sub-system of the running state of the second 2OO2 sub-system.

Optionally, a third diagnostic component is provided on a cloud host where the first 2OO2 sub-system is located, the third diagnostic component being configured to obtain a running state of the cloud host where the first 2OO2 sub-system is located; the third diagnostic component determines a final running state of the first 2OO2 sub-system on the basis of the running state of the cloud host, and the running state of the first 2OO2 sub-system obtained through diagnosis by the first diagnostic component and the second diagnostic component, and notifies the second 2OO2 sub-system of the final running state; a sixth diagnostic component is provided on a cloud host where the second 2OO2 sub-system is located, the sixth diagnostic component being configured to obtain a running state of the cloud host where the second 2OO2 sub-system is located; the sixth diagnostic component determines a final running state of the second 2OO2 sub-system on the basis of the running state of the cloud host, and the running state of the second 2OO2 sub-system obtained through diagnosis by the fourth diagnostic component and the fifth diagnostic component, and notifies the first 2OO2 sub-system of the final running state.

Optionally, the first virtual machine and the second virtual machine exchange input data, and subject the exchanged input data to computation, to obtain output data corresponding to the exchanged input data, wherein, if the output data are consistent and the first 2OO2 sub-system is running normally, then an output of the first 2OO2 sub-system is valid, otherwise the output of the first 2OO2 sub-system is invalid; the fourth virtual machine and the fifth virtual machine exchange input data, and subject the exchanged input data to computation, to obtain output data corresponding to the exchanged input data, wherein, if the output data are consistent and the second 2OO2 sub-system is running normally, then an output of the second 2OO2 sub-system is valid, otherwise the output of the second 2OO2 sub-system is invalid.

Optionally, the first management node is configured to allocate one of the first virtual machine or the second virtual machine as a first main virtual machine, which is configured to perform comparative computation of the output data of the first virtual machine and the second virtual machine; and to allocate one of the fourth virtual machine or the fifth virtual machine as a second main virtual machine, which is configured to perform comparative computation of the output data of the fourth virtual machine and the fifth virtual machine.

Optionally, the first management node is further configured to migrate input data on a cloud host where the first 2OO2 sub-system is located, when a fault occurs in the first 2OO2 sub-system, or migrate input data on a cloud host where the second 2OO2 sub-system is located, when a fault occurs in the second 2OO2 sub-system.

Optionally, the first management node is further configured to set the first 2OO2 sub-system and the second 2OO2 sub-system as an active 2OO2 sub-system and a standby 2OO2 sub-system respectively.

Optionally, the system further comprises: at least one backup cloud host; when a fault occurs in any one of the cloud hosts where the first 2OO2 sub-system and the second 2OO2 sub-system are disposed, input data of the cloud host where the fault has occurred is migrated onto the backup cloud host.

Optionally, said migration of input data of the cloud host where the fault has occurred onto the backup cloud host is performed by a healthy 2OO2 sub-system or a healthy cloud host in the first 2OO2 sub-system and the second 2OO2 sub-system.

Embodiments of the present application provide a 2*2OO2 security system based on a cloud platform. The 2*2OO2 security system based on the cloud platform has each of the two 2OO2 sub-systems disposed on at least two cloud hosts, with each of the two 2OO2 sub-systems comprising virtual machines with different operating system types; and upon detecting that a fault has occurred in one of the 2OO2 sub-systems, the first management node switches to using the other 2OO2 sub-system. Compared with a conventional 2*2OO2 security system which achieves security through physical isolation, the 2*2OO2 security system based on the cloud platform uses the cloud platform instead of physical hardware to realize the 2*2OO2 security system, and while ensuring security, can effectively improve the usability, reliability and maintainability of the 2*2OO2 security system and effectively lower the hardware cost and hardware maintenance cost of the 2*2OO2 security system. Furthermore, since the 2*2OO2 security system based on the cloud platform is based on a conventional cloud architecture, the cloud architecture of the cloud platform need not be redesigned.

### Brief description of the drawings

The following drawings are merely intended to illustrate and explain the present application schematically, without limiting the scope thereof. In the drawings,
Fig. 1 shows a schematic drawing of a conventional 2*2OO2 security system.
Fig. 2 shows a schematic drawing of a 2*2OO2 security system based on a cloud platform in an embodiment of the present application.
Fig. 3 shows a schematic drawing of the architecture of a cloud host in a cloud platform in an embodiment of the present application.
Fig. 4 shows a schematic drawing of a cloud host, and diagnostic components in virtual machines in the cloud host, in an embodiment of the present application.
Fig. 5 shows a schematic drawing of interaction between diagnostic components in virtual machines in the same 2OO2 sub-system in an embodiment of the present application.
Fig. 6 shows a schematic drawing of interaction between virtual machines in the same 2OO2 sub-system in an embodiment of the present application.
Fig. 7 shows a schematic drawing of management nodes in two 2OO2 sub-systems in an embodiment of the present application.
Fig. 8 shows a schematic drawing of backups of cloud hosts where a fault has occurred in two 2OO2 sub-systems in an embodiment of the present application.

### Key to the drawings:

- 11:: first computer;
- 12:: second computer;
- 13:: third computer;
- 14:: fourth computer;
- 15:: first 2OO2 system;
- 16:: second 2OO2 system;
- 20:: cloud platform;
- 21:: Ethernet redundant network;
- 22:: first cloud host;
- 23:: second cloud host;
- 24:: first virtual machine;
- 25:: second virtual machine;
- 26:: fourth virtual machine;
- 27:: fifth virtual machine;
- 28:: third virtual machine;
- 29:: sixth virtual machine;
- 30:: memory;
- 31:: bus;
- 32:: first virtual processor;
- 33:: second virtual processor;
- 34:: processor;
- 35:: first diagnostic component;
- 36:: application program of first virtual machine;
- 37:: fourth diagnostic component;
- 38:: application program of fourth virtual machine;
- 39:: third diagnostic component;
- 40:: sixth diagnostic component;
- 41:: second diagnostic component;
- 42:: application program of second virtual machine;
- 43:: fifth diagnostic component;
- 44:: application program of fifth virtual machine;
- 45:: first scheduler;
- 46:: second scheduler;
- 47:: active sub-system;
- 48:: standby sub-system;
- 49:: first backup cloud host;
- 50:: second backup cloud host;
- 51:: first virtual machine in first backup cloud host;
- 52:: second virtual machine in first backup cloud host;
- 53:: first virtual machine in second backup cloud host;
- 54:: second virtual machine in second backup cloud host.

### Detailed description of the invention

To enable a clearer understanding of the technical features, object and effects of embodiments of the present application, specific ways of implementing embodiments of the present application are now described with reference to the drawings.

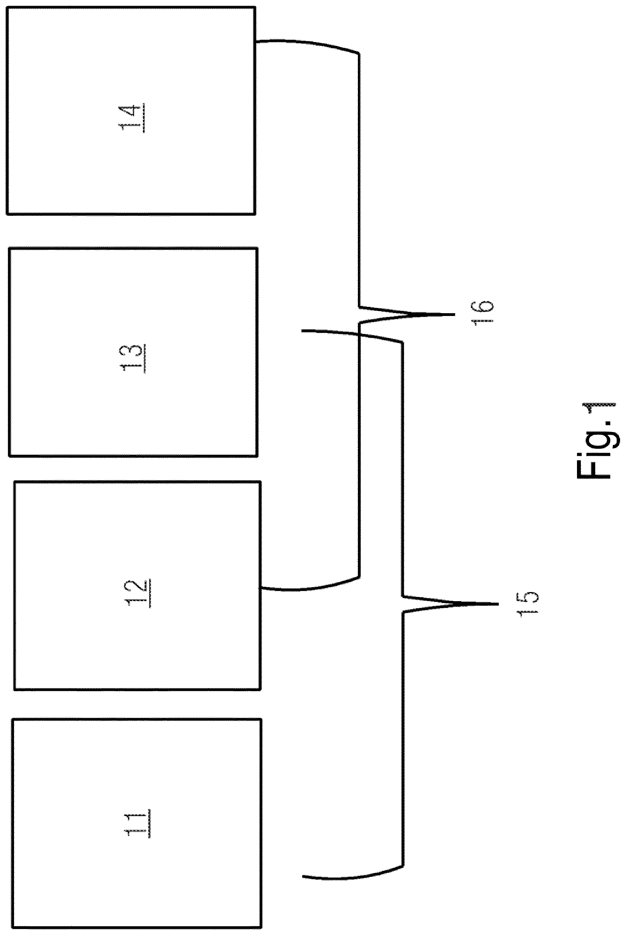

Fig. 1 shows a schematic drawing of a conventional 2*2OO2 (double 2-out-of-2) security system. As shown in Fig. 1, the conventional 2*2OO2 security system comprises a first 2OO2 (2-out-of-2) system 15 and a second 2OO2 (2-out-of-2) system 16. The first 2OO2 system 15 is formed of a first computer 11 and a third computer 13; the second 2OO2 system 16 is formed of a second computer 12 and a fourth computer 14. The software, hardware and structures of the first 2OO2 system 15 and the second 2OO2 system 16 are exactly the same, forming a redundant hot standby system. Specifically, if the first 2OO2 system 15 suffers a fault, the second 2OO2 system 16 should take responsibility for subjecting input data to computation, to obtain an output result. If the second 2OO2 system 16 suffers a fault, the first 2OO2 system 15 should take responsibility for subjecting input data to computation, to obtain an output result. The occurrence of a fault in the first computer 11 or third computer 13 in the first 2OO2 system 15 will cause a fault to occur in the first 2OO2 system 15. Similarly, the occurrence of a fault in the second computer 12 or fourth computer 14 in the second 2OO2 system 16 will cause a fault to occur in the second 2OO2 system 16. The first 2OO2 system 15 and the second 2OO2 system 16 detect faults mainly by comparing output results from the two computers in the same 2OO2 system. If the output results of the two computers in the same 2OO2 system are not the same, this 2OO2 system should automatically set a running state to a running fault state. However, the conventional 2*2OO2 security system is highly reliant on a hardware architecture formed by multiple computers. Thus, the conventional 2*2OO2 security system has a high hardware cost and increased difficulty of maintenance, lowering the usability of the conventional 2*2OO2 security system. As can be seen, the conventional 2*2OO2 security system has the technical problem of how to effectively improve the usability of the 2*2OO2 security system.

In response to this technical problem, the inventors of the present application propose a 2*2OO2 security system based on a cloud platform, to solve the technical problem associated with the conventional 2*2OO2 security system, namely, how to effectively improve the usability of the 2*2OO2 security system.

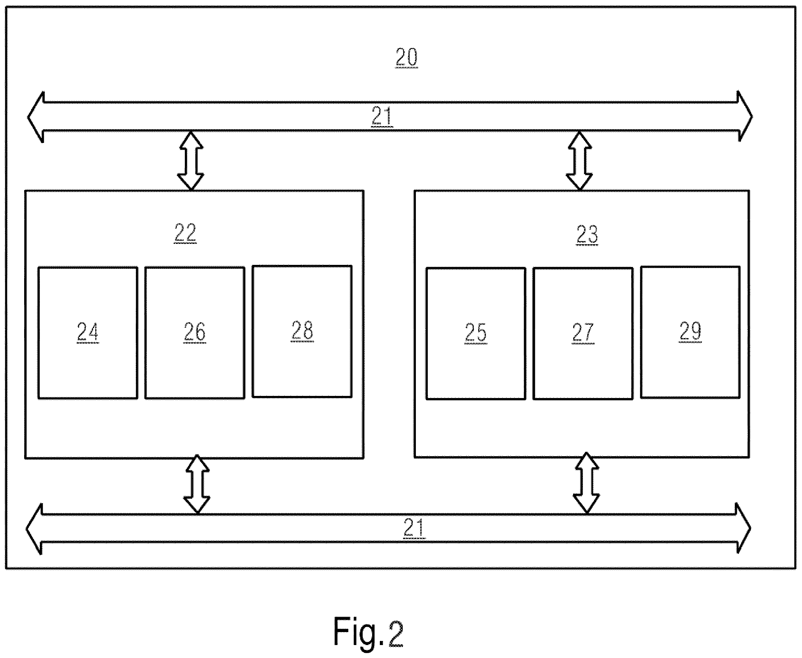

Fig. 2 shows a schematic drawing of a 2*2OO2 security system based on a cloud platform in an embodiment of the present application. As shown in Fig. 2, the 2*2OO2 security system based on the cloud platform provided in an embodiment of the present application comprises: a first 2OO2 sub-system, the first 2OO2 sub-system being disposed on at least two cloud hosts, and the first 2OO2 sub-system comprising a first virtual machine 24 and a second virtual machine 25, with operating systems of different types installed on the first virtual machine 24 and second virtual machine 25; a second 2OO2 sub-system, the second 2OO2 sub-system being disposed on at least two cloud hosts, and the second 2OO2 sub-system comprising a fourth virtual machine 26 and a fifth virtual machine 27, with operating systems of different types installed on the fourth virtual machine 26 and fifth virtual machine 27; and a first management node, the first management node being disposed on a cloud host, and the first management node comprising a third virtual machine 28, the first management node being configured to switch to using the second 2OO2 sub-system upon detecting that a fault has occurred in the first 2OO2 sub-system, or switch to using the first 2OO2 sub-system upon detecting that a fault has occurred in the second 2OO2 sub-system.

In this embodiment, the 2*2OO2 security system based on the cloud platform has each of the two 2OO2 sub-systems disposed on at least two cloud hosts, with each of the two 2OO2 sub-systems comprising virtual machines with different operating system types; and upon detecting that a fault has occurred in one of the 2OO2 sub-systems, the first management node switches to using the other 2OO2 sub-system. Compared with a conventional 2*2OO2 security system which achieves security through physical isolation, the 2*2OO2 security system based on the cloud platform uses the cloud platform instead of physical hardware to realize the 2*2OO2 security system, and while ensuring security, can effectively improve the usability, reliability and maintainability of the 2*2OO2 security system and effectively lower the hardware cost and hardware maintenance cost of the 2*2OO2 security system. Furthermore, since the 2*2OO2 security system based on the cloud platform is based on a conventional cloud architecture, the cloud architecture of the cloud platform need not be redesigned.

In a specific example, as shown in Fig. 2, the first 2OO2 sub-system is formed by the first virtual machine 24 in a first cloud host 22 in the cloud platform 20, and the second virtual machine 25 in a second cloud host 23 in the cloud platform 20. In order to meet the diversity requirement of IEC 61508, discover faults promptly and reduce the probability of leading to the dangerous side, the operating system type of the first virtual machine 24 in the first cloud host 22 is different from the operating system type of the second virtual machine 25 in the second cloud host 23; for example, the operating system type of the first virtual machine 24 in the first cloud host 22 is a Windows operating system, while the operating system type of the second virtual machine 25 in the second cloud host 23 is a Linux operating system. The second 2OO2 sub-system is formed by the fourth virtual machine 26 in the first cloud host 22 in the cloud platform 20 and the fifth virtual machine 27 in the second cloud host 23 in the cloud platform 20. In order to meet the diversity requirement of IEC 61508, discover faults promptly and reduce the probability of leading to the dangerous side, the operating system type of the fourth virtual machine 26 in the first cloud host 22 is different from the operating system type of the fifth virtual machine 27 in the second cloud host 23; for example, the operating system type of the fourth virtual machine 26 in the first cloud host 22 is a Windows operating system, while the operating system type of the fifth virtual machine 27 in the second cloud host 23 is a Linux operating system. The first management node communicates with the first 2OO2 sub-system and the second 2OO2 sub-system via an Ethernet redundant network 21. The operating system type of the third virtual machine 28 comprised by the first management node may be a Windows operating system or a Linux operating system.

In some optional embodiments, the system further comprises: a second management node, the second management node being disposed on a cloud host, and the second management node comprising a sixth virtual machine 29, the second management node being configured to work with the first management node in a redundant hot standby manner. Thus, if a fault occurs in the first management node, the second management node is able to replace the first management node and continue the work of the first management node, and it is thus possible to further improve the usability of the 2*2OO2 security system based on the cloud platform.

In a specific example, the second management node communicates with the first 2OO2 sub-system and the second 2OO2 sub-system via an Ethernet redundant network 21. The operating system type of the sixth virtual machine 29 comprised by the second management node may be a Windows operating system or a Linux operating system.

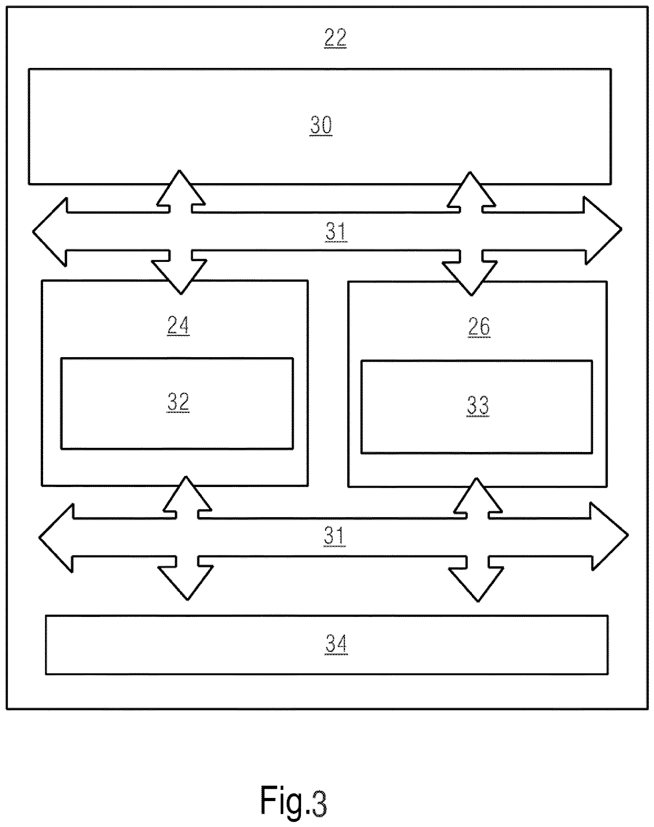

In some optional embodiments, the cloud host supports virtualization of hardware of various types. As shown in Fig. 3, the first cloud host 22 comprises a memory 30, the first virtual machine 24 and fourth virtual machine 26 which communicate with the memory 30 via a bus 31, and a processor 34 which communicates with the first virtual machine 24 and the fourth virtual machine 26 via a bus 31. A first virtual processor 32 is provided in the first virtual machine 24, and a second virtual processor 33 is provided in the fourth virtual machine 26. As can be seen, the first cloud host 22 not only supports virtualization of processors, but also supports virtualization of memory.

In some optional embodiments, the first virtual machine 24 is provided with a first diagnostic component 35, the first diagnostic component 35 being configured to obtain a first running state, the first running state comprising: a running state of at least one of the first virtual machine 24, an application program 36 running on the first virtual machine 24, and the first diagnostic component 35; the second virtual machine 25 is provided with a second diagnostic component 41, the second diagnostic component 41 being configured to obtain a second running state, the second running state comprising: a running state of at least one of the second virtual machine 25, an application program 42 running on the second virtual machine 25, and the second diagnostic component 41; the first diagnostic component 35 and the second diagnostic component 41 diagnose a running state of the first 2OO2 sub-system by exchanging the first running state and the second running state, and notify the second 2OO2 sub-system of the running state of the first 2OO2 sub-system; the fourth virtual machine 26 is provided with a fourth diagnostic component 37, the fourth diagnostic component 37 being configured to obtain a fourth running state, the fourth running state comprising: a running state of at least one of the fourth virtual machine 26, an application program 38 running on the fourth virtual machine 26, and the fourth diagnostic component 37; the fifth virtual machine 27 is provided with a fifth diagnostic component 43, the fifth diagnostic component 43 being configured to obtain a fifth running state, the fifth running state comprising: a running state of at least one of the fifth virtual machine 27, an application program 44 running on the fifth virtual machine 27, and the fifth diagnostic component 43; the fourth diagnostic component 37 and the fifth diagnostic component 43 diagnose a running state of the second 2OO2 sub-system by exchanging the fourth running state and the fifth running state, and notify the first 2OO2 sub-system of the running state of the second 2OO2 sub-system. Thus, the provision of the first diagnostic component and second diagnostic component at the first virtual machine and the second virtual machine respectively makes it comparatively easy to obtain the first running state and second running state. Furthermore, the first diagnostic component and the second diagnostic component can accurately diagnose the running state of the first 2OO2 sub-system by exchanging the first running state and the second running state, and can promptly notify the second 2OO2 sub-system of the running state of the first 2OO2 sub-system. Similarly, the provision of the fourth diagnostic component and fifth diagnostic component at the fourth virtual machine 26 and the fifth virtual machine 27 respectively makes it comparatively easy to obtain the fourth running state and fifth running state. Furthermore, the fourth diagnostic component and the fifth diagnostic component can accurately diagnose the running state of the second 2OO2 sub-system by exchanging the fourth running state and the fifth running state, and can promptly notify the first 2OO2 sub-system of the running state of the second 2OO2 sub-system.

In a specific example, the first diagnostic component 35 may be understood to be a component with a diagnostic function, disposed in the first virtual machine 24. The running state of the first virtual machine 24 comprises a running normal state or a running fault state of the first virtual machine 24. The running state of the application program running on the first virtual machine 24 comprises a running normal state or a running fault state of the application program running on the first virtual machine 24. The running state of the first diagnostic component 35 comprises a running normal state or a running fault state of the first diagnostic component 35. The second diagnostic component 41 may be understood to be a component with a diagnostic function, disposed in the second virtual machine 25. The running state of the second virtual machine 25 comprises a running normal state or a running fault state of the second virtual machine 25. The running state of the application program running on the second virtual machine 25 comprises a running normal state or a running fault state of the application program running on the second virtual machine 25. The running state of the second diagnostic component 41 comprises a running normal state or a running fault state of the second diagnostic component 41. After the first diagnostic component 35 and the second diagnostic component 41 have exchanged the first running state and the second running state, the first diagnostic component 35 diagnoses the running state of the first 2OO2 sub-system on the basis of the first running state and the second running state. Specifically, if the first running state and the second running state are both the running normal state, then the first diagnostic component 35 diagnoses the running state of the first 2OO2 sub-system as the running normal state. Otherwise, the first diagnostic component 35 diagnoses the running state of the first 2OO2 sub-system as the running fault state. After the first diagnostic component 35 and the second diagnostic component 41 have exchanged the first running state and the second running state, the second diagnostic component 41 may also diagnose the running state of the first 2OO2 sub-system on the basis of the first running state and the second running state. The specific process of diagnosis is similar to that for the first diagnostic component 35, so is not repeated here. After the first diagnostic component 35 or the second diagnostic component 41 has completed the diagnosis of the running state of the first 2OO2 sub-system, the first diagnostic component 35 or the second diagnostic component 41 notifies the first management node of the running state of the first 2OO2 sub-system by means of a diagnosis packet. If the running state of the first 2OO2 sub-system is the running fault state, then the first management node switches to using the second 2OO2 sub-system.

The fourth diagnostic component 37 may be understood to be a component with a diagnostic function, disposed in the fourth virtual machine 26. The running state of the fourth virtual machine 26 comprises a running normal state or a running fault state of the fourth virtual machine 26. The running state of the application program running on the fourth virtual machine 26 comprises a running normal state or a running fault state of the application program running on the fourth virtual machine 26. The running state of the fourth diagnostic component 37 comprises a running normal state or a running fault state of the fourth diagnostic component 37. The fifth diagnostic component 43 may be understood to be a component with a diagnostic function, disposed in the fifth virtual machine 27. The running state of the fifth virtual machine 27 comprises a running normal state or a running fault state of the fifth virtual machine 27. The running state of the application program running on the fifth virtual machine 27 comprises a running normal state or a running fault state of the application program running on the fifth virtual machine 27. The running state of the fifth diagnostic component 43 comprises a running normal state or a running fault state of the fifth diagnostic component 43. After the fourth diagnostic component 37 and the fifth diagnostic component 43 have exchanged the fourth running state and the fifth running state, the fourth diagnostic component 37 diagnoses the running state of the second 2OO2 sub-system on the basis of the fourth running state and the fifth running state. Specifically, if the fourth running state and the fifth running state are both the running normal state, then the fourth diagnostic component 37 diagnoses the running state of the second 2OO2 sub-system as the running normal state. Otherwise, the fourth diagnostic component 37 diagnoses the running state of the second 2OO2 sub-system as the running fault state. After the fourth diagnostic component 37 and the fifth diagnostic component 43 have exchanged the fourth running state and the fifth running state, the fifth diagnostic component 43 may also diagnose the running state of the second 2OO2 sub-system on the basis of the fourth running state and the fifth running state. The specific process of diagnosis is similar to that for the fourth diagnostic component 37, so is not repeated here. After the fourth diagnostic component 37 or the fifth diagnostic component 43 has completed the diagnosis of the running state of the second 2OO2 sub-system, the fourth diagnostic component 37 or the fifth diagnostic component 43 notifies the first management node of the running state of the second 2OO2 sub-system by means of a diagnosis packet. If the running state of the second 2OO2 sub-system is the running fault state, then the first management node switches to using the first 2OO2 sub-system.

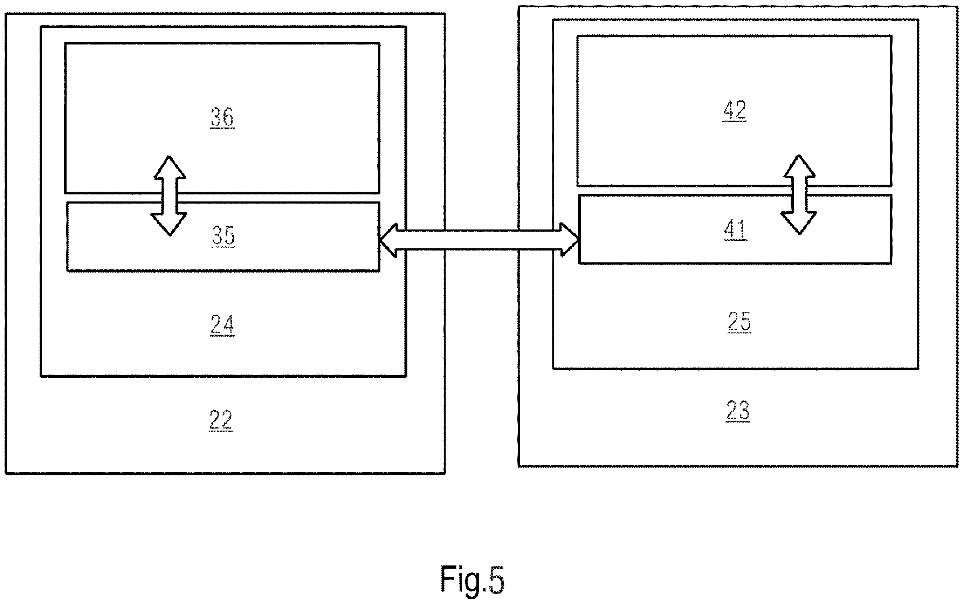

In a specific example, as shown in Fig. 5, the first 2OO2 sub-system is formed by the first virtual machine 24 in the first cloud host 22 and the second virtual machine 25 in the second cloud host 23. The first diagnostic component 35 disposed in the first virtual machine 24 is configured to obtain running states of the first virtual machine 24, the application program 36 running on the first virtual machine 24, and the first diagnostic component 35. The second diagnostic component 41 disposed in the second virtual machine 25 is configured to obtain running states of the second virtual machine 25, the application program 42 running on the second virtual machine 25, and the second diagnostic component 41. The first diagnostic component 35 and the second diagnostic component 41 exchange their respective running states by means of diagnosis packets, diagnose the running state of the first 2OO2 sub-system, and notify the first management node of the running state of the first 2OO2 sub-system. If the running state of the first 2OO2 sub-system is the running fault state, the first management node switches to using the second 2OO2 sub-system.

In some optional embodiments, a third diagnostic component 39 is provided on a cloud host where the first 2OO2 sub-system is located, the third diagnostic component 39 being configured to obtain a running state of the cloud host where the first 2OO2 sub-system is located; the third diagnostic component 39 determines a final running state of the first 2OO2 sub-system on the basis of the running state of the cloud host, and the running state of the first 2OO2 sub-system obtained through diagnosis by the first diagnostic component 35 and the second diagnostic component 41, and notifies the second 2OO2 sub-system of the final running state; a sixth diagnostic component 40 is provided on a cloud host where the second 2OO2 sub-system is located, the sixth diagnostic component 40 being configured to obtain a running state of the cloud host where the second 2OO2 sub-system is located; the sixth diagnostic component 40 determines a final running state of the second 2OO2 sub-system on the basis of the running state of the cloud host, and the running state of the second 2OO2 sub-system obtained through diagnosis by the fourth diagnostic component 37 and the fifth diagnostic component 43, and notifies the first 2OO2 sub-system of the final running state. Thus, the provision of the third diagnostic component on the cloud host where the first 2OO2 sub-system is located makes it comparatively easy to obtain the running state of the cloud host where the first 2OO2 sub-system is located. Furthermore, based on the running state of the cloud host where the first 2OO2 sub-system is located, and the running state of the first 2OO2 sub-system obtained through diagnosis by the first diagnostic component 35 and the second diagnostic component 41, it is possible to determine the final running state of the first 2OO2 sub-system more accurately, and the second 2OO2 sub-system can be notified of the final running state of the first 2OO2 sub-system promptly. Similarly, the provision of the sixth diagnostic component on the cloud host where the second 2OO2 sub-system is located makes it comparatively easy to obtain the running state of the cloud host where the second 2OO2 sub-system is located. Furthermore, based on the running state of the cloud host where the second 2OO2 sub-system is located, and the running state of the second 2OO2 sub-system obtained through diagnosis by the fourth diagnostic component 37 and the fifth diagnostic component 43, it is possible to determine the final running state of the second 2OO2 sub-system more accurately, and the first 2OO2 sub-system can be notified of the final running state of the second 2OO2 sub-system promptly.

In a specific example, the third diagnostic component 39 may be understood to be a component with a diagnostic function, disposed on the cloud host where the first 2OO2 sub-system is located. The running state of the cloud host where the first 2OO2 sub-system is located comprises a running normal state or a running fault state of the cloud host where the first 2OO2 sub-system is located. If the running state of the cloud host where the first 2OO2 sub-system is located is the running normal state, and the running state of the first 2OO2 sub-system obtained through diagnosis by the first diagnostic component 35 and the second diagnostic component 41 is the running normal state, then the third diagnostic component 39 determines the final running state of the first 2OO2 sub-system as a running normal state. Otherwise, the third diagnostic component 39 determines the final running state of the first 2OO2 sub-system as a running fault state. After determining the final running state of the first 2OO2 sub-system, the third diagnostic component 39 notifies the first management node of the final running state of the first 2OO2 sub-system by means of a diagnosis packet. If the final running state of the first 2OO2 sub-system is the running fault state, then the first management node switches to using the second 2OO2 sub-system.

The sixth diagnostic component 40 may be understood to be a component with a diagnostic function, disposed on the cloud host where the second 2OO2 sub-system is located. The running state of the cloud host where the second 2OO2 sub-system is located comprises a running normal state or a running fault state of the cloud host where the second 2OO2 sub-system is located. If the running state of the cloud host where the second 2OO2 sub-system is located is the running normal state, and the running state of the second 2OO2 sub-system obtained through diagnosis by the fourth diagnostic component 37 and the fifth diagnostic component 43 is the running normal state, then the sixth diagnostic component 40 determines the final running state of the second 2OO2 sub-system as a running normal state. Otherwise, the sixth diagnostic component 40 determines the final running state of the second 2OO2 sub-system as a running fault state. After determining the final running state of the second 2OO2 sub-system, the sixth diagnostic component 40 notifies the first management node of the final running state of the second 2OO2 sub-system by means of a diagnosis packet. If the final running state of the second 2OO2 sub-system is the running fault state, then the first management node switches to using the first 2OO2 sub-system.

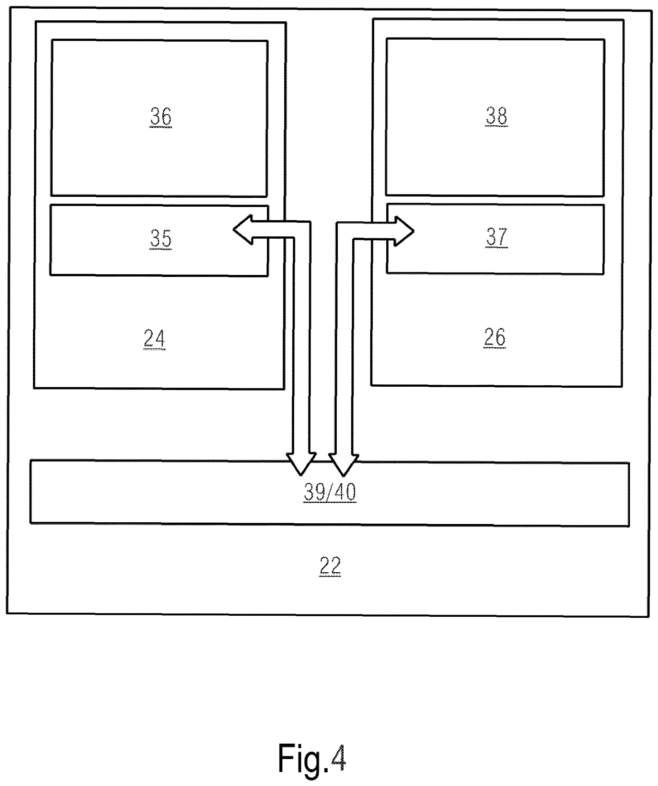

In a specific example, as shown in Fig. 4, since the first virtual machine 24 comprised by the first 2OO2 sub-system and the fourth virtual machine 26 comprised by the second 2OO2 sub-system are both located in the first cloud host, a diagnostic component disposed on the first cloud host 22 may be the third diagnostic component 39 or the sixth diagnostic component 40. The diagnostic component disposed on the first cloud host 22 is configured to obtain the running state of the first cloud host 22, and determine the final running state of the first 2OO2 sub-system on the basis of the running state of the first cloud host and the running state of the first 2OO2 sub-system which is obtained through diagnosis by the first diagnostic component 35 and the second diagnostic component 41, and notify the first management node of the final running state of the first 2OO2 sub-system. If the final running state of the first 2OO2 sub-system is the running fault state, the first management node switches to using the second 2OO2 sub-system. Furthermore, the diagnostic component disposed on the first cloud host 22 determines the final running state of the second 2OO2 sub-system on the basis of the running state of the first cloud host and the running state of the second 2OO2 sub-system which is obtained through diagnosis by the fourth diagnostic component 37 and the fifth diagnostic component 43, and notifies the first management node of the final running state of the second 2OO2 sub-system. If the final running state of the second 2OO2 sub-system is the running fault state, the first management node switches to using the first 2OO2 sub-system.

In some optional embodiments, the first virtual machine 24 and the second virtual machine 25 exchange input data, and subject the exchanged input data to computation, to obtain output data corresponding to the exchanged input data, wherein, if the output data are consistent and the first 2OO2 sub-system is running normally, then the output of the first 2OO2 sub-system is valid, otherwise the output of the first 2OO2 sub-system is invalid; the fourth virtual machine 26 and the fifth virtual machine 27 exchange input data, and subject the exchanged input data to computation, to obtain output data corresponding to the exchanged input data, wherein, if the output data are consistent and the second 2OO2 sub-system is running normally, then the output of the second 2OO2 sub-system is valid, otherwise the output of the second 2OO2 sub-system is invalid. Thus, if the output data of the first virtual machine 24 and the second virtual machine 25 are not consistent or a fault occurs in the first 2OO2 sub-system, the output of the first 2OO2 sub-system is invalid, and the second 2OO2 sub-system can then be used, whereby the usability of the 2*2OO2 security system based on the cloud platform can be further improved. Furthermore, if the output data of the fourth virtual machine 26 and the fifth virtual machine 27 are not consistent or a fault occurs in the second 2OO2 sub-system, the output of the second 2OO2 sub-system is invalid, and the first 2OO2 sub-system can then be used, whereby the usability of the 2*2OO2 security system based on the cloud platform can be further improved.

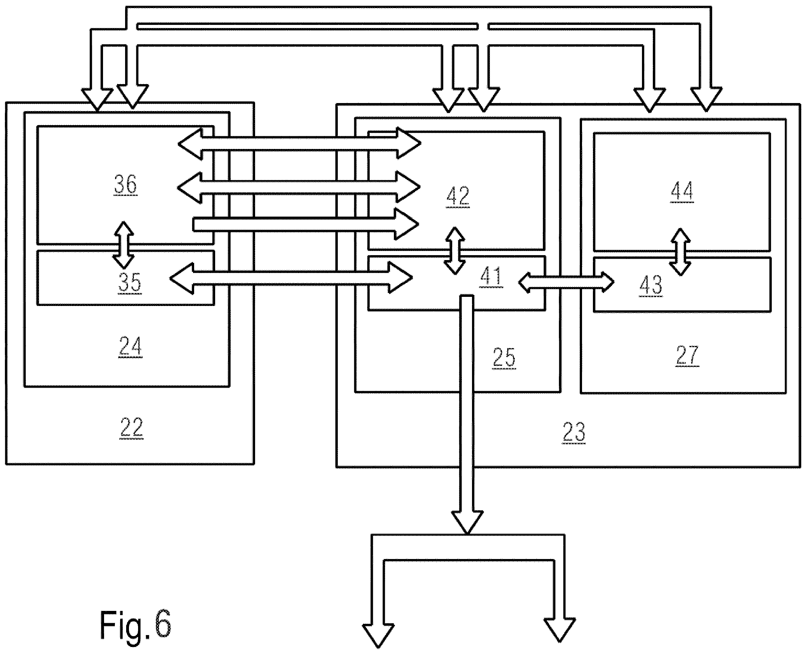

In a specific example, a single 2OO2 sub-system uses a similar data flow and mechanism to that in a conventional 2*2OO2 security system. As shown in Fig. 6, the first virtual machine 24 in the first cloud host 22 and the second virtual machine 25 in the second cloud host 23 form the first 2OO2 sub-system. The process of exchange between the first virtual machine 24 and the second virtual machine 25 is as follows: the application program 36 in the first virtual machine 24 and the application program 42 in the second virtual machine 25 exchange input data; the application program 36 in the first virtual machine 24 and the application program 42 in the second virtual machine 25 perform periodic synchronization of states and data for subjecting exchanged input data to computation; the application program 36 in the first virtual machine 24 and the application program 42 in the second virtual machine 25 separately subject the exchanged input data to computation; the application program 36 in the first virtual machine 24 sends a computation output result to the application program 42 in the second virtual machine 25, for comparison; the application program 42 in the second virtual machine 25 compares an output result of its own computation with the output result sent by the application program 36 in the first virtual machine 24, and determines whether the output of the first 2OO2 sub-system is valid on the basis of a comparison result and the running state of the first 2OO2 sub-system provided by the second diagnostic component 41 in the second virtual machine 25; if it is determined that the input data are consistent on the basis of the comparison result, and the first 2OO2 sub-system is running normally, then it is determined that the output of the first 2OO2 sub-system is valid, otherwise it is determined that the output of the first 2OO2 sub-system is invalid, and a message that the output of the first 2OO2 sub-system is invalid is sent to the second 2OO2 sub-system by means of the second diagnostic component 41 in the second virtual machine 25. Thereafter, the second 2OO2 sub-system should automatically take over control from the first 2OO2 sub-system.

In some optional embodiments, the first management node is configured to allocate one of the first virtual machine 24 or the second virtual machine 25 as a first main virtual machine, which is configured to perform comparative computation of the output data of the first virtual machine 24 and the second virtual machine 25; and to allocate one of the fourth virtual machine 26 or the fifth virtual machine 27 as a second main virtual machine, which is configured to perform comparative computation of the output data of the fourth virtual machine 26 and the fifth virtual machine 27. Thus, as the first management node allocates one of the first virtual machine 24 or the second virtual machine 25 as a first main virtual machine for performing comparative computation of the output data of the first virtual machine 24 and the second virtual machine 25, the usability of the 2*2OO2 security system based on the cloud platform can be further improved. Furthermore, as the first management node allocates one of the fourth virtual machine 26 or the fifth virtual machine 27 as a second main virtual machine for performing comparative computation of the output data of the fourth virtual machine 26 and the fifth virtual machine 27, the usability of the 2*2OO2 security system based on the cloud platform can be further improved.

In some optional embodiments, the first management node is further configured to migrate input data on a cloud host where the first 2OO2 sub-system is located, when a fault occurs in the first 2OO2 sub-system, or migrate input data on a cloud host where the second 2OO2 sub-system is located, when a fault occurs in the second 2OO2 sub-system. Thus, when a fault occurs in the first 2OO2 sub-system, the third virtual machine 28 can make the 2*2OO2 security system based on the cloud platform more usable by migrating input data on a cloud host where the first 2OO2 sub-system is located. Furthermore, when a fault occurs in the second 2OO2 sub-system, the sixth virtual machine 29 can make the 2*2OO2 security system based on the cloud platform more usable by migrating input data on a cloud host where the second 2OO2 sub-system is located.

In a particular example, when a fault occurs in the first 2OO2 sub-system, the first management node migrates input data on a cloud host where the first 2OO2 sub-system is located to a backup cloud host. Specifically, the first management node migrates input data on a cloud host where the first 2OO2 sub-system is located to a backup cloud host by performing network communication with the backup cloud host. When a fault occurs in the second 2OO2 sub-system, the first management node migrates input data on a cloud host where the second 2OO2 sub-system is located to a backup cloud host. Specifically, the first management node migrates input data on a cloud host where the second 2OO2 sub-system is located to a backup cloud host by performing network communication with the backup cloud host.

In some optional embodiments, the first management node is further configured to set the first 2OO2 sub-system and the second 2OO2 sub-system as an active 2OO2 sub-system and a standby 2OO2 sub-system respectively. Thus, the usability of the 2*2OO2 security system based on the cloud platform can be increased by means of the first management node setting the first 2OO2 sub-system as the active 2OO2 sub-system, and by means of the first management node setting the second 2OO2 sub-system as the standby 2OO2 sub-system.

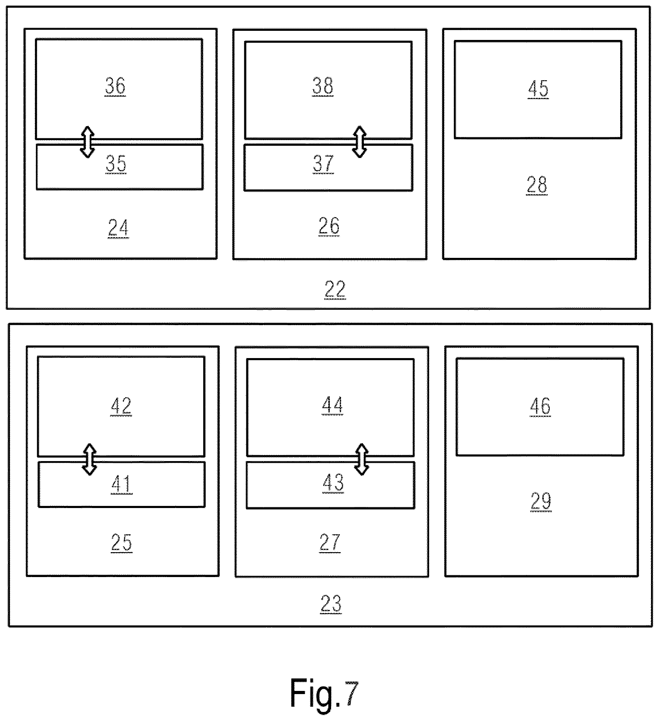

In a particular example, as shown in Fig. 7, the first management node comprises the third virtual machine 28 in the first cloud host 22. Specifically, the first management node comprises a first scheduler 45 in the third virtual machine 28 in the first cloud host 22. The second management node comprises the sixth virtual machine 29 in the second cloud host 23. Specifically, the second management node comprises a second scheduler 46 in the sixth virtual machine 29 in the second cloud host 23. When the 2*2OO2 security system based on the cloud platform is initialized, the first management node sets the first 2OO2 sub-system as the active 2OO2 sub-system, and the first management node sets the second 2OO2 sub-system as the standby 2OO2 sub-system. At the same time, one of the first virtual machine 24 or the second virtual machine 25 is allocated, by means of the first management node, as a first main virtual machine for performing comparative computation of the output data of the first virtual machine 24 and the second virtual machine 25, and one of the fourth virtual machine 26 or the fifth virtual machine 27 is allocated, by means of the first management node, as a second main virtual machine for performing comparative computation of the output data of the fourth virtual machine 26 and the fifth virtual machine 27. When a fault occurs in the first 2OO2 sub-system, the first management node migrates input data on a cloud host where the first 2OO2 sub-system is located to a backup cloud host by performing network communication with the backup cloud host. When a fault occurs in the second 2OO2 sub-system, the first management node migrates input data on a cloud host where the second 2OO2 sub-system is located to a backup cloud host by performing network communication with the backup cloud host.

In some optional embodiments, the system further comprises: at least one backup cloud host, and when a fault occurs in any one of the cloud hosts where the first 2OO2 sub-system and the second 2OO2 sub-system are disposed, input data of the cloud host where the fault has occurred is migrated onto the backup cloud host. Thus, when a fault occurs in any one of the cloud hosts where the first 2OO2 sub-system and the second 2OO2 sub-system are disposed, hardware faults of the cloud host where the fault has occurred can be effectively avoided by migrating input data of the cloud host where the fault has occurred onto the backup cloud host, and the usability of the 2*2OO2 security system based on the cloud platform can thus be effectively improved.

In a particular example, said migration of input data of the cloud host where the fault has occurred onto the backup cloud host is performed by a healthy 2OO2 sub-system or a healthy cloud host in the first 2OO2 sub-system and the second 2OO2 sub-system. Thus, as the healthy 2OO2 sub-system or the healthy cloud host in the first 2OO2 sub-system and the second 2OO2 sub-system migrates input data of the cloud host where the fault has occurred onto the backup cloud host, the input data of the cloud host where the fault has occurred can be reliably migrated onto the backup cloud host.

In a particular example, when it is diagnosed, by means of a diagnostic component in a cloud host, that a fault has occurred in any one of the cloud hosts where the first 2OO2 sub-system and the second 2OO2 sub-system are disposed, the first management node is notified of a running fault state of the cloud host where the fault has occurred by means of the diagnostic component in the cloud host where the fault has occurred, so that the first management node calls the healthy 2OO2 sub-system to migrate the input data of the cloud host where the fault has occurred to the backup cloud host. Optionally, when it is diagnosed, by means of a diagnostic component in a cloud host, that a fault has occurred in any one of the cloud hosts where the first 2OO2 sub-system and the second 2OO2 sub-system are disposed, the healthy cloud host is notified of a running fault state of the cloud host where the fault has occurred by means of the diagnostic component in the cloud host where the fault has occurred, so that the healthy cloud host migrates the input data of the cloud host where the fault has occurred to the backup cloud host.

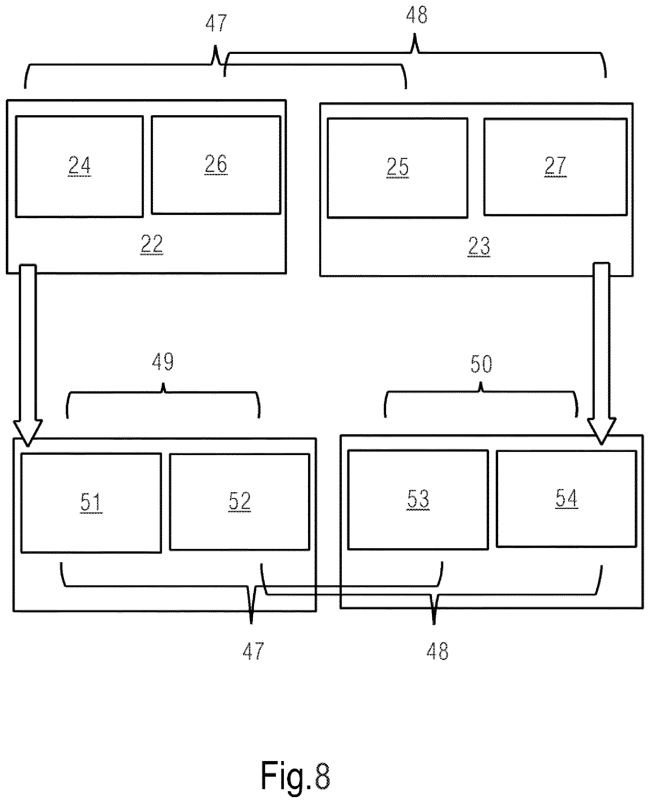

In a particular example, as shown in Fig. 8, if the running states of the first cloud host 22 and the second cloud host 23 are both running fault states, then input data of the first cloud host 22 is migrated to a first backup cloud host 49, and input data of the second cloud host 23 is migrated to a second backup cloud host 50. In addition, an active sub-system 47 formed by a first virtual machine 51 in the first backup cloud host 49 and a first virtual machine 53 in the second backup cloud host 50 corresponds to an active sub-system 47 formed by a first virtual machine 24 in the first cloud host 22 and a second virtual machine 25 in the second cloud host 23. A standby sub-system 48 formed by a second virtual machine 52 in the first backup cloud host 49 and a second virtual machine 54 in the second backup cloud host 50 corresponds to a standby sub-system 48 formed by a fourth virtual machine 26 in the first cloud host 22 and a fifth virtual machine 27 in the second cloud host 23.

It should be understood that although the present invention has been described according to various embodiments, it is certainly not the case that each embodiment comprises only one independent technical solution. This method of presentation has been adopted herein purely for the sake of clarity; those skilled in the art should consider the Description in its entirety, and the technical solutions in the embodiments may be suitably combined to form other embodiments understandable to those skilled in the art.

The above are merely specific, illustrative ways of implementing embodiments of the present invention, and are not intended to limit the scope of embodiments of the present invention. All equivalent changes, modifications and combinations made by any person skilled in the art without departing from the concept and principles of embodiments of the present invention should be included in the scope of protection of embodiments of the present invention.

## Claims

1. A 2*2OO2 security system based on a cloud platform, the system comprising:
a first 2OO2 sub-system, the first 2OO2 sub-system being disposed on at least two cloud hosts, and the first 2OO2 sub-system comprising a first virtual machine (24) and a second virtual machine (25), with operating systems of different types installed on the first virtual machine (24) and second virtual machine (25);
a second 2OO2 sub-system, the second 2OO2 sub-system being disposed on at least two cloud hosts, and the second 2OO2 sub-system comprising a fourth virtual machine (26) and a fifth virtual machine (27), with operating systems of different types installed on the fourth virtual machine (26) and fifth virtual machine (27); and
a first management node, the first management node being disposed on a cloud host, and the first management node comprising a third virtual machine (28), the first management node being configured to switch to using the second 2OO2 sub-system upon detecting that a fault has occurred in the first 2OO2 sub-system, or switch to using the first 2OO2 sub-system upon detecting that a fault has occurred in the second 2OO2 sub-system.

2. The 2*2OO2 security system based on a cloud platform as claimed in claim 1, wherein the system further comprises:
a second management node, the second management node being disposed on a cloud host, and the second management node comprising a sixth virtual machine (29), the second management node being configured to work with the first management node in a redundant hot standby manner.

3. The 2*2OO2 security system based on a cloud platform as claimed in claim 1, wherein
the first virtual machine (24) is provided with a first diagnostic component (35), the first diagnostic component (35) being configured to obtain a first running state, the first running state comprising: a running state of at least one of the first virtual machine (24), an application program (36) running on the first virtual machine (24), and the first diagnostic component (35);
the second virtual machine (25) is provided with a second diagnostic component (41), the second diagnostic component (41) being configured to obtain a second running state, the second running state comprising: a running state of at least one of the second virtual machine (25), an application program (42) running on the second virtual machine (25), and the second diagnostic component (41);
the first diagnostic component (35) and the second diagnostic component (41) diagnose a running state of the first 2OO2 sub-system by exchanging the first running state and the second running state, and notify the second 2OO2 sub-system of the running state of the first 2OO2 sub-system;
the fourth virtual machine (26) is provided with a fourth diagnostic component (37), the fourth diagnostic component (37) being configured to obtain a fourth running state, the fourth running state comprising: a running state of at least one of the fourth virtual machine (26), an application program (38) running on the fourth virtual machine (26), and the fourth diagnostic component (37);
the fifth virtual machine (27) is provided with a fifth diagnostic component (43), the fifth diagnostic component (43) being configured to obtain a fifth running state, the fifth running state comprising: a running state of at least one of the fifth virtual machine (27), an application program (44) running on the fifth virtual machine (27), and the fifth diagnostic component (43);
the fourth diagnostic component (37) and the fifth diagnostic component (43) diagnose a running state of the second 2OO2 sub-system by exchanging the fourth running state and the fifth running state, and notify the first 2OO2 sub-system of the running state of the second 2OO2 sub-system.

4. The 2*2OO2 security system based on a cloud platform as claimed in claim 3, wherein
a third diagnostic component (39) is provided on a cloud host where the first 2OO2 sub-system is located, the third diagnostic component (39) being configured to obtain a running state of the cloud host where the first 2OO2 sub-system is located;
the third diagnostic component (39) determines a final running state of the first 2OO2 sub-system on the basis of the running state of the cloud host, and the running state of the first 2OO2 sub-system obtained through diagnosis by the first diagnostic component (35) and the second diagnostic component (41), and notifies the second 2OO2 sub-system of the final running state;
a sixth diagnostic component (40) is provided on a cloud host where the second 2OO2 sub-system is located, the sixth diagnostic component (40) being configured to obtain a running state of the cloud host where the second 2OO2 sub-system is located;
the sixth diagnostic component (40) determines a final running state of the second 2OO2 sub-system on the basis of the running state of the cloud host, and the running state of the second 2OO2 sub-system obtained through diagnosis by the fourth diagnostic component (37) and the fifth diagnostic component (43), and notifies the first 2OO2 sub-system of the final running state.

5. The 2*2OO2 security system based on a cloud platform as claimed in claim 1, wherein
the first virtual machine (24) and the second virtual machine (25) exchange input data, and subject the exchanged input data to computation, to obtain output data corresponding to the exchanged input data, wherein, if the output data are consistent and the first 2OO2 sub-system is running normally, then an output of the first 2OO2 sub-system is valid, otherwise the output of the first 2OO2 sub-system is invalid;
the fourth virtual machine (26) and the fifth virtual machine (27) exchange input data, and subject the exchanged input data to computation, to obtain output data corresponding to the exchanged input data, wherein, if the output data are consistent and the second 2OO2 sub-system is running normally, then an output of the second 2OO2 sub-system is valid, otherwise the output of the second 2OO2 sub-system is invalid.

6. The 2*2OO2 security system based on a cloud platform as claimed in claim 5, wherein
the first management node is configured to allocate one of the first virtual machine (24) or the second virtual machine (25) as a first main virtual machine, which is configured to perform comparative computation of the output data of the first virtual machine (24) and the second virtual machine (25); and to allocate one of the fourth virtual machine (26) or the fifth virtual machine (27) as a second main virtual machine, which is configured to perform comparative computation of the output data of the fourth virtual machine (26) and the fifth virtual machine (27) .

7. The 2*2OO2 security system based on a cloud platform as claimed in claim 6, wherein
the first management node is further configured to migrate input data on a cloud host where the first 2OO2 sub-system is located, when a fault occurs in the first 2OO2 sub-system, or migrate input data on a cloud host where the second 2OO2 sub-system is located, when a fault occurs in the second 2OO2 sub-system.

8. The 2*2OO2 security system based on a cloud platform as claimed in claim 6, wherein
the first management node is further configured to set the first 2OO2 sub-system and the second 2OO2 sub-system as an active 2OO2 sub-system and a standby 2OO2 sub-system respectively.

9. The 2*2OO2 security system based on a cloud platform as claimed in claim 1, wherein the system further comprises:
at least one backup cloud host;
when a fault occurs in any one of the cloud hosts where the first 2OO2 sub-system and the second 2OO2 sub-system are disposed, input data of the cloud host where the fault has occurred is migrated onto the backup cloud host.

10. The 2*2OO2 security system based on a cloud platform as claimed in claim 9, wherein
said migration of input data of the cloud host where the fault has occurred onto the backup cloud host is performed by a healthy 2OO2 sub-system or a healthy cloud host in the first 2OO2 sub-system and the second 2OO2 sub-system.
